Europäisches Patentamt

European Patent Office

Office européen des brevets

Publication number: **0 299 114**

**A1**

# EUROPEAN PATENT APPLICATION

Application number: 87201350.3

Date of filing: 15.07.87

Int. Cl.⁴ **H02H 5/08 , A45D 20/30**

Date of publication of application:
**18.01.89 Bulletin 89/03**

Designated Contracting States:
**AT DE FR GB NL**

Applicant: **N.V. Philips' Gloeilampenfabrieken**
**Groenewoudseweg 1**
**NL-5621 BA Eindhoven(NL)**

Inventor: **Ricciardelli, John Joseph**
**c/o INT. OCTROOIBUREAU B.V. Prof.**
**Holstlaan 6**
**NL-5656 AA Eindhoven(NL)**

Representative: **Peters, Rudolf Johannes et al**
**INTERNATIONAAL OCTROOIBUREAU B.V.**
**Prof. Holstlaan 6**
**NL-5656 AA Eindhoven(NL)**

Shock protection device for small appliances.

A shock protection device with a mechanical latch for use in small electrical appliances. A sensor is positioned within the appliance in areas where a conductive fluid may enter the appliance and in close proximity of the power leads. When a conductive fluid causes a current leakage from the power leads to the sensor, a control circuit connected to the sensor activates a solenoid which releases a reset lever disconnecting the electrical power applied to the appliance. The device is reset by manually pressing the reset lever.

EP 0 299 114 A1

Shock protection device for small appliances.

BACKGROUND OF THE INVENTION

The invention relates to the field of shock protection devices in general and, in particular, to immersion detection current interrupter circuits designed to protect the user of a small hand-held electrical appliance from a serious electrical shock if the appliance is immersed in or otherwise comes into contact with an electrically conductive fluid, such as water.

Shock protection devices known in the prior art are of two types, ground fault current interrupter circuits (GFCI) and immersion detection current interrupter circuits. Various devices incorporating such circuits are also known in the prior art. GFCI devices are presently required in new electrical installations in bathrooms and other locations. Typically, such devices are included in an assembly connected to an electrical outlet.

Prior art shock protection devices are designed primarily for electrical devices of substantial size and cost. These devices tend to be sophisticated, complex devices which, while of substantial economic and safety value, are not appropriate for the volume and variety of inexpensive consumer products in the field of hand-held small electrical appliances. Typical of the prior patent art are the ground fault current interrupting devices disclosed in U.S. Patents 4.345.289 and 4.358.708 for use in residential applications. A typical industrial hazard protection device is disclosed in U.S. Patent 4.103.319. Such devices are inappropriate in terms of size, complexity and cost for small consumer appliances.

The closest specific prior art patent is U.S. 4.493.975 which discloses a wall-mounted hand-held hair dryer. The principal power switch for the appliance is contained in the wall-mounted housing. When the appliance is removed from the wall mount, this switch is in the "off" position and no power flows to the appliance. Thus, if the appliance should accidently or intentionally be immersed in a conductive fluid, it is electrically dead and no shock hazard is present. To torn on power to the appliance, the user must activate a switch in the wall mount. Simply returning the hand-held dryer to the wall mount turns the switch off. The problem with this prior art device and the UL standard itself is that there is no protection from electrical shock when the power switch is in the "on" position.

However, simple, reliable, inexpensive shock protection devices incorporated in components small enough to be used in hand-held personal care appliances such as hair dryers and curling irons, and similar consumer appliances and tools are not disclosed in the prior patent art nor are such devices commercially available.

The prior art fails to disclose a simple, inexpensive circuit embodied in a small component device which serves to protect the user of a small electrical appliance from electrical shock if the appliance comes into contact with an electrically conductive fluid such as water. The most frequent hazard of this type is the use of hair dryers in a bathroom. When a personal care appliance such as a hair dryer or electric razor comes into contact with water, the user may receive an electrical shock which can be fatal. Further, if the power switch is located on the appliance, the possibility of shock exists even if the appliance is "off".

SUMMARY OF THE INVENTION

The object of the present invention is to protect the user from a serious shock (above .005 amps.) with a simple and inexpensive device. This object is achieved in a shock protection device for use in small, hand-held electrical appliances having two power leads (which also apply electrical power to said appliance), said device comprising a control circuit coupled between said two power leads, said control circuit having a control input and a power output, a sensor coupled to the control input of said control circuit for sensing a current leakage from one of said power leads, switch means connected to said two power leads between said control circuit and said electrical appliance for selectively disconnecting said power leads from said electrical appliance, actuating means coupled to said switch means for actuating said switch means, and means coupled to the power output of said control circuit for energizing said actuating means, whereby when said sensor detects a current leakage, said control circuit causes said actuating means to actuate said switch means disconnecting said power leads from said appliance.

The present invention is a simple, reliable, inexpensive shock protection device in the form of an immersion detection current interrupter circuit which provides shock protection when a hand-held small appliance comes into electrical contact with an electrically conductive fluid, such as water. This device is designed to be packaged as a small component for inclusion within or near the electrical plug at the end of the power cord. When the appliance is plugged into an electrical power source such as a wall outlet and is immersed in or otherwise comes into electrical contact with a conductive fluid, there will be a current leakage whether the appliance is "on" or "off". The sensor in the device detects this leakage current and causes the device to activate a solenoid which releases a reset lever which disconnects the power source from the appliance.


## DESCRIPTION OF THE DRAWINGS

With the above and additional objects and advantages in mind as will hereinafter appear, the invention will be described with reference to the accompanying drawings, in which:

Figure 1 is a block diagram of the shock protection device of the subject invention;

Figure 2 is a schematic diagram of a control circuit for use in the device of Figure 1; and

Figure 3 is a cross-sectional plan view of a hand-held hair dryer showing the placement of the sensor of the invention.


## DESCRIPTION OF THE PREFERRED EMBODIMENT

The shock protection device of the present invention is a simple, reliable, inexpensive immersion detection current interrupter circuit which addresses the hazard of the possible severe, even fatal, electrical shock to a person if a hand-held appliance is dropped into a conductive fluid such as water which is also in contact with the person. Since non-distilled water is a conductive fluid and the hand-held hair dryer is a small appliance most frequently used in close proximity to water, resulting in statistically significant injuries especially among children, the present invention will be described in an embodiment useful in said hair dryers. It is to be understood that the invention is not limited thereto.

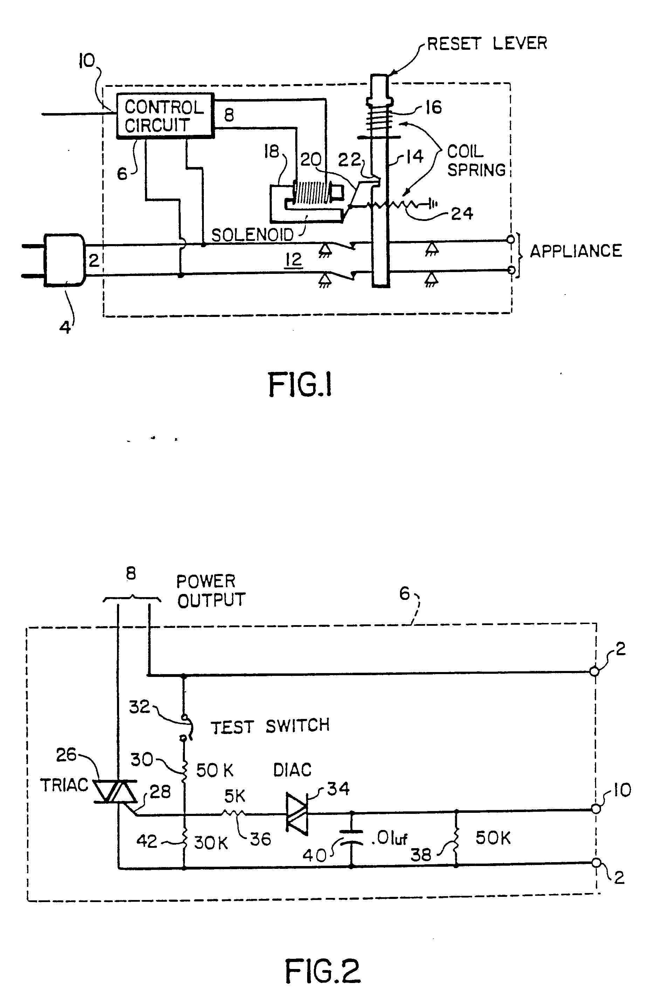

Figure 1 is a block diagram of the shock protection device of the present invention. Power leads 2 are connectible to a power source (not shown) by means of a plug 4. A control circuit 6 is connected between the power leads 2 and has a power output 8 and a control input 10. The power leads 2 have connected therein a switch 12 for selectively disconnecting the power source from an ensuring appliance. A reset lever 14 is mechanically coupled to the switch 12 for actuating the same. The reset lever 14 includes a spring 16 for biasing the reset lever 14 to a position in which the switch 12 disconnects the power source.

The shock protection device also includes a solenoid 18 connected to the power output 8 of the control circuit 6 and has an actuator 20 for engaging a recess 22 in the reset lever 14. The recess 22 is positioned on the reset lever 14 such that when engaged by the actuator 20, the reset lever 14 is retained in a position in which the switch 12 connects the power source to the appliance. A spring 24 is attached to the actuator 20 for biasing the actuator 20 toward the recess 22.

An embodiment of the control circuit 6 is shown in Figure 2 and includes a triac 26 interconnecting one of the power leads 2 and one of the power outputs 8 thereof. The triac 26 has a control gate 28 connected to a series arrangement of a resistor 30 and a test switch 32, which series arrangement is, in turn, connected to the other of the power leads 2 and the other of the power outputs 8. A diac 34 has an input connected to the control input 10 of the control circuit 6 and an output connected, through a resistor 36, to the control gate 28 of the triac 26. A parallel arrangement of a resistor 38 and a capacitor 40 is arranged between the control input 10 of the control circuit 6 and one of the power leads 2. An additional resistor 42 is connected between the control gate 28 of the triac 26 and the power input of the triac 26.

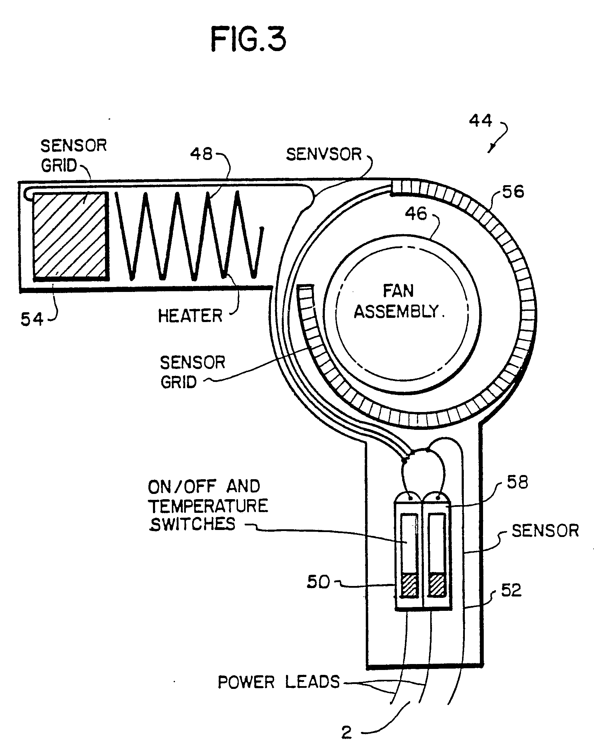

Figure 3 shows, in cross-section, a hand-held hair dryer 44 which may be used with the shock protection device of the invention. The hair dryer 44 includes a fan assembly 46 and a heater 48 connectible to the power leads 2 through on/off and temperature switches 50. A sensor lead 52 connects sensor grids 54 and 56, as well as the mounting plates 58 of the switches 50 to the control input 10 of the control circuit 6. The sensor grids 54 and 56 may be replaced by a conductive coating on the housing of the hair dryer 44.

In operation, the plug 4 is inserted into a power source such as a wall socket. When the hair dryer 44 is immersed in a conductive fluid, whether the switches 50 are "on" or "off", the conductive fluid may cause a current leakage between the "hot" power lead 2 and the sensor lead 52, which current leakage is applied to the control input 10 of the control circuit 6. In response thereto, the triac 26 closes, applying power to the solenoid 18. The solenoid 18 withdraws the actuator 20 from the recess 22, in opposition to the spring 24, allowing the spring 16 to move the reset lever 14, opening the switch 12 which disconnects the power source from the hair dryer 44.

The shock protection device may be reset by moving the reset lever 14, in oppostiion to the spring 16, until the actuator 20, in response to the spring 24, reengages the recess 22. The test switch 32 is included for periodically testing the shock protection device and when closed, applies a current to the control gate 28 of the triac 26 simulating a current leakage detected by the sensor lead 52. Diac 34 is included to make the control circuit 6 less susceptible to noise on the power leads 2 and may be eliminated by providing another means for filtering and/or by proper selection of triac 26.

In a practical embodiment of the invention, the components have the following values:

| Component | Value |
|---|---|
| Triac 26 | RCA T2300D |
| Diac 34 | GEST2 |
| Capacitor 40 | 0.01uf |
| Resistors 30, 38 | 5 0k ohms |
| Resistor 42 | 30K ohms |

Using the above values, the start of power shut-down occurs within one-half of an a.c. power cycle (i.e. within 9 milliseconds), and the maximum leakage current is 5 milliamperes.

Numerous alterations of the structure herein disclosed will suggest themselves to those skilled in the art. However, it is to be understood that the present disclosure relates to a preferred embodiment of the invention which is for purposes of illustration only and not to be construed as a limitation of the invention. All such modifications which do not depart from the spirit of the invention are intended to be included within the scope of the appended claims.

## Claims

1. A shock protection device for use in small, hand-held electrical appliances having at least two power leads for applying electrical power to said appliance, said circuit comprising:

a control circuit coupled between said two power leads, said control circuit having a control input and a power output;

a sensor coupled to the control input of said control circuit for sensing a current leakage from one of said power leads;

switch means connected to said two power leads between said control circuit and said electrical appliance for selectively disconnecting said power leads from said electrical appliance;

actuating means coupled to said switch means for actuating said switch means; and

means coupled to the power output of said control circuit for energizing said actuating means; whereby when said sensor detects a current leakage, said control circuit causes said actuating means to actuate said switch means disconnecting said power leads from said appliance.

2. A shock protection device as claimed in Claim 1, wherein said actuating means comprises a reset lever mechanically coupled to said switch means, and means for biasing said reset lever toward an "off" position of said switch means.

3. A shock protection device as claimed in Claim 2, wherein said energizing means comprises a solenoid connected to the power output of said control cicuit, said solenoid having an actuator for engaging a recess in said reset lever for holding said reset lever in opposition to said biasing means whereby when said actuator engages said recess, said switch means is in an "on" position thereof.

4. A shock protection device as claimed in Claim 1, 2 or 3, wherein said control circuit comprises a triac having an input coupled to one of said two power leads, an output coupled to the power output of said control circuit, and a control gate, and a diac having an input coupled to the control input of said control circuit and an output coupled to the control gate of said triac, the other of said two power leads also being coupled to the power output of said control circuit.

5. A shock protection device as claimed in Claim 4, wherein said sensor comprises an electrically conductive grid arranged in said appliance in areas which may be exposed to an electrically conductive fluid and in close proximity to said power leads, whereby said sensor detects current leakage from said power leads due to exposure to said electrically conductive fluid.

6. A shock protection device as claimed in Claim 4, wherein said control circuit further comprises a test switch coupled between the other of said two power leads and the control gate of said triac for selectively applying electrical power to said control gate for simulating a current leakage applied to said control input of said control circuit thereby testing the operation of said control circuit.

FIG.1

FIG.2

# FIG.3

44

SENSOR GRID

48

SENVSOR

56

46

FAN ASSEMBLY.

54

HEATER

SENSOR GRID

ON/OFF AND TEMPERATURE SWITCHES

58

SENSOR

50

52

POWER LEADS

2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 464 582 (ARAGAKI et al.)<br>* Whole document * | 1-5 | H 02 H 5/08<br>A 45 D 20/30 |
| Y |  | 6 | |
| X | WO-A-8 502 724 (LEVITON)<br>* Whole document * | 1-4 | |
| Y | WO-A-8 701 902 (BIRKMEYER)<br>* Figure 5; page 11, lines 17-28 * | 6 | |
| D,A | US-A-4 103 319 (CRAIN et al.) | | |
| D,A | EP-A-0 126 777 (YAMADA) | | |
| D,A | US-A-4 345 289 (HOWELL) | | |

**TECHNICAL FIELDS SEARCHED (Int. Cl.4)**

H 02 H
A 45 D

The present search report has been drawn up for all claims

| Place of search | Date of completion of the search | Examiner |
|---|---|---|
| THE HAGUE | 02-03-1988 | KOLBE W.H. |